(19)

Europäisches
Patentamt
European
Patent Office
Office européen
des brevets

(11)  **EP 2 809 122 B1**

(12)  **EUROPEAN PATENT SPECIFICATION**

(45) Date of publication and mention
of the grant of the patent:
**10.07.2019   Bulletin 2019/28**

(51) Int Cl.:
***H04W 72/08*** *(2009.01)*

(21) Application number: **13305717.4**

(22) Date of filing: **30.05.2013**

(54) **Wireless Telecommunications Network Node and Method**

Drahtloser Telekommunikationsnetzwerkknoten und Verfahren

N'ud de réseau de télécommunications sans fil et procédé

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.12.2014   Bulletin 2014/49**

(73) Proprietor: **Alcatel Lucent
91620 Nozay (FR)**

(72) Inventors:
• **Kucera, Stepan
Dublin, 15 (IE)**

• **Lopez-Perez, David
Dublin, 15 (IE)**

(74) Representative: **Browne, Robin Forsythe et al
Hepworth Browne
15 St Paul's Street
Leeds LS1 2JG (GB)**

(56) References cited:
**WO-A1-2010/108136       WO-A2-2010/141913
US-A1- 2010 260 116**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a wireless telecommunications network node, a method and a computer program product.

BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

WO2010/108136 discloses a way of reducing intercell interference using UE identifiers in the form of RNTIs. The RNTIs are divided into two subsets, a first subset that is allocated to UEs that it is determined are likely to cause interference and a second subset allocated to those that are not likely to cause interference. This is judged on the UEs attributes such as how close to a cell edge it is located. When a UE does experience interference it searches the RNTIs of the first subset and thus, has a reduced number of RNTSs to search to find the UE causing the inference.

WO 2010/141913 discloses a system again for reducing interference using time division multiplexing of the available downlink control resources or frequency division multiplexing of the available uplink resources.

SUMMARY

According to a first aspect, there is provided a wireless telecommunications network node method in accordance with claim 1.

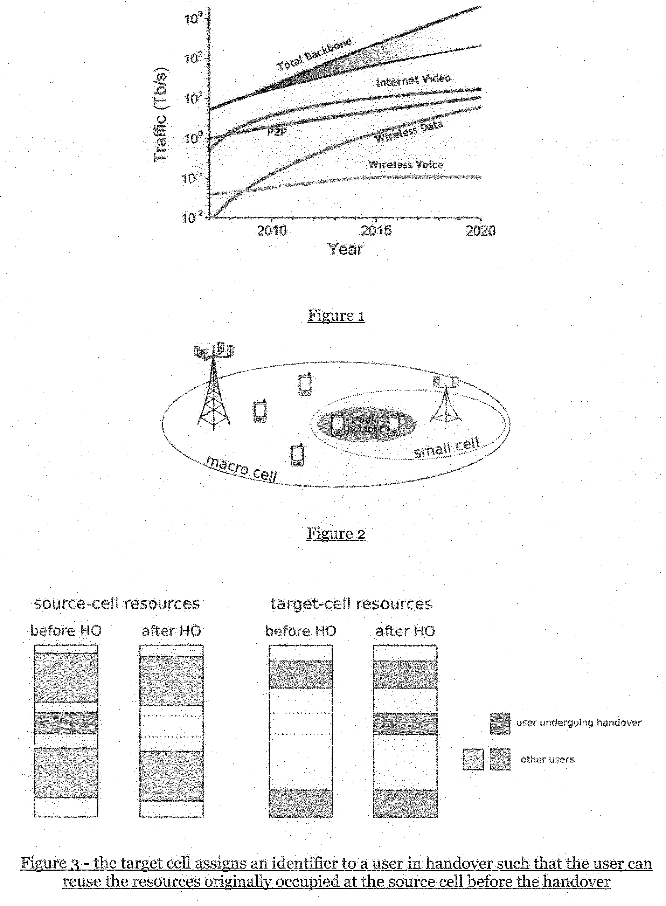

The first aspect recognises that the increasing demand for wireless multimedia services is driving a strong growth in wireless data traffic. As shown in Figure 1, the capacity of current networks need to be augmented by one or two orders of magnitude to cope with the trend. Moreover, as the world-wide sales of increasingly capable tablets are expected to reach 500 million in 2015, service providers also expect subscribers to demand not only higher data rates, but also better user experience and quality of service.

In contrary to the performance-wise nearly-saturated physical layer, the deployment of small cells can theoretically increase the achievable data rates by multiple orders of magnitude without requiring additional wireless resources. However, it is very expensive to provide full area coverage using small cells only, particularly in areas with lower user demand. Therefore, network providers are increasingly interested in hierarchical cell structures where macro cells for area coverage are complemented with small cells to provide high capacity where needed as illustrated in Figure 2.

The deployment of macro cells is typically optimized by means of network planning to provide a near-continuous coverage of the geographic area of the network. On the other hand, small cells are deployed in an ad hoc manner to cover traffic hot-spots or macro-cell coverage holes. Typically, small cells are deployed within macro cells or in their vicinity.

Since the frequency spectrum available for cellular networks is limited and expensive, operators are keen on re-using the macro-cell spectrum also for small cells. Such co-channel deployments can achieve higher spectral efficiencies compared to separate channel deployments, but suffer from increased co-channel interference.

In general, macro-cell users moving fast through the coverage of multiple small cells are likely to experience a transmission outage as the inter-cell interference in the control plane results into non-negligible rates of handover failures and radio link failures. The interference also negatively affects the decoding of the data plane because the control plane conveys the information on downlink/ uplink scheduling grants and power control commands.

In order to simply explanation the control plane is understood to be the user-specific control information such downlink/uplink scheduling grants and power control commands (essentially, the information on the Physical Downlink Control CHannel PDCCH). Cell-specific channels responsible for conveying information on primary/ secondary synchronization (PSS/ SSS), broadcast control (PBCH), control reference (CRS) etc. are ignored, even though the notion of cell identifiers, related to cell-specific control channels, will be mentioned.

The first aspect seeks to mitigate the co-channel interference affecting the control channels, particularly in the critical cell-edge situations such as the pre-/post-handover situations, to ensure a complete and seamless co-existence of the macro-cell tier and the small-cell tier.

Current two-tier networks, i.e. networks containing both macro-cell and small-cell tiers, solve the issue of mobility and inter-tier interference management by dedicating nonoverlapping frequency bands to each tier. This is a common scenario for current deployments in 3G CDMA networks, but it is applicable also to 4G OFDMA systems by using the concept of carrier aggregation. A similar approach consists of letting the aggressor cells (e.g., macro cells) unilaterally vacated part of their resources (so-called almost blank subframes) to reduce interference to the victim users (e.g., small-cell users). Coordinated multipoint transmission techniques are also being considered, but their standardization focuses only on the general framework, targeting mainly data channels.

However, the first aspect recognises that each of these approaches have shortcomings. In particular, although technically simple and viable, the above approaches significantly reduce the network capacity and spectral efficiency, while also contributing to added complexity/ overhead. For these reasons, co-channel and/or non-blanking solutions are more preferable.

Accordingly, a wireless telecommunications network node method may be provided. The method may comprise the step of defining a set of neighbouring co-channel cells comprising a plurality of cells. Hence, the set may comprise those adjacent cells which support transmission on the same frequency or channel which would therefore support transmissions which interfere with each other. The method may comprise the step of determining that an event has occurred relating to user equipment being supported by at least two cells of the set. The method may comprise the step of allocating a user equipment identifier to the user equipment being supported by the at least two cells of the set to locate corresponding messages for the user equipment within a resource at locations which reduce interference between those messages. Hence, rather than randomly allocating user equipment identifiers, by using specific user equipment identifiers, it is possible to locate messages at locations within the resource which obviates, reduces or minimises interference between those messages.

In one embodiment, the event comprises at least one of a change in user equipment being supported by the at least two cells of the set; initiation of handover of user equipment between the at least two cells of the set; and an expiration of a timer. Hence, the allocation or reallocation of user equipment identifiers can occur for a variety of different reasons in order to reduce interference between messages.

In one embodiment, the step of allocating comprises allocating the user equipment identifier to user equipment to relocate the messages within the resource. Hence, the location of the messages can be changed.

In one embodiment, the step of allocating comprises allocating the user equipment identifier to user equipment to relocate the messages within the resource to at least partially unoccupy locations utilised by messages for other user equipment. Accordingly, even when it is not possible to completely unoccupy, remove overlap or avoid collision between the messages, the occupation, overlap or degree of collision may be minimised to reduce interference.

In one embodiment, the step of allocating comprises allocating the user equipment identifier to user equipment to relocate the messages within the resource to fully unoccupy locations utilised by messages for other user equipment. Accordingly, it may be possible to completely remove overlap or avoid collision between the messages to reduce interference.

In one embodiment, the step of allocating comprises allocating the user equipment identifier to user equipment of the at least two cells of the set to relocate the messages within the resource of the at least two cells of the set. Accordingly, user equipment identifiers of more than one cell may be changed to reduce interference.

Hence, on handover, the user equipment identifier may be allocated within the target cell to locate messages in the target cell to overlap completely with the location of the messages in the source cell which should become unused for the period immediately following handover, thereby reducing interference.

In one embodiment, the step of allocating comprises allocating the user equipment identifier to user equipment supported by a target cell to relocate the messages within the resource of the target cell to at least partially unoccupy a location occupied by messages within the resource of the source cell used by user equipment of the source cell to be handed over to the target cell.

In one embodiment, the step of allocating comprises allocating the user equipment identifier to user equipment supported by a target cell to relocate the messages within the resource of the target cell to fully unoccupy a location occupied by messages within the resource of the source cell used by user equipment of the source cell to be handed over to the target cell.

In one embodiment, the step of allocating comprises allocating the user equipment identifier to user equipment supported by a source cell to relocate the messages within the resource of the source cell to at least partially occupy a location unoccupied by messages within the resource of the target cell used by the user equipment to be handed over to the target cell.

In one embodiment, the step of allocating comprises allocating the user equipment identifier to user equipment supported by a source cell to relocate the messages within the resource of the source cell to fully occupy a location unoccupied by messages within the resource of the target cell used by the user equipment to be handed over to the target cell.

In one embodiment, the messages comprise control messages.

According to a second aspect, there is provided a computer program product according to claim 10.

According to a third aspect, there is provided a wireless telecommunications network node according to claim 11.

As disclosed herein, the allocating logic is operable to allocate the user equipment identifier to user equipment to relocate the messages within the resource.

As disclosed herein, the allocating logic is operable to allocate the user equipment identifier to user equipment to relocate the messages within the resource to at least partially unoccupy locations utilised by messages for other user equipment.

As disclosed herein, the allocating logic is operable to allocate the user equipment identifier to user equipment to relocate the messages within the resource to fully unoccupy locations utilised by messages for other user equipment.

As disclosed herein, the allocating logic is operable to allocate the user equipment identifier to user equipment of the at least two cells of the set to relocate the messages within the resource of the at least two cells of the set.

As disclosed herein, the allocating logic is operable to allocate the user equipment identifier to user equipment supported by a target cell to relocate the messages within the resource of the target cell to at least partially unoccupy a location occupied by messages within the resource of the source cell used by user equipment of the source cell to be handed over to the target cell.

As disclosed herein, the allocating logic is operable to allocate the user equipment identifier to user equipment supported by a target cell to relocate the messages within the resource of the target cell to fully unoccupy a location occupied by messages within the resource of the source cell used by user equipment of the source cell to be handed over to the target cell.

As disclosed herein, the allocating logic is operable to allocate the user equipment identifier to user equipment supported by a source cell to relocate the messages within the resource of the source cell to at least partially occupy a location unoccupied by messages within the resource of the target cell used by the user equipment to be handed over to the target cell.

As disclosed herein, the allocating logic is operable to allocate the user equipment identifier to user equipment supported by a source cell to relocate the messages within the resource of the source cell to fully occupy a location unoccupied by messages within the resource of the target cell used by the user equipment to be handed over to the target cell.

As disclosed herein, the messages comprise control messages.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates network traffic predictions;
Figure 2 illustrates an example small cell deployment;

Figure 3 illustrates user equipment identifier allocation to locate control messages within a resource according to one embodiment;

Figure 4 illustrates inter-cell interference;

Figure 5 illustrates a control region; and

Figures 6 to 8 illustrate user equipment identifier allocation to locate control messages within a resource according to embodiments.

## DESCRIPTION OF THE EMBODIMENTS

Overview

Before discussing the embodiments in any more detail, first an overview will be provided. Unlike data transmissions, the LTE standards do not specify any dedicated tools that allow explicitly controlling the location of control messages within the physical transmission space. The standard approach consists essentially in pseudo-randomizing the location of control messages in order to spread evenly the interference, rather than attempting to consciously mitigate it as much as possible.

In this context, embodiments are based on the observation that the actual mapping of logical control transmissions of different users onto the actual physical carrier resources is a fully deterministic process, configured primarily by user identifiers and cell identifiers. Hence, (non)-colliding locations of control PDCCH transmissions by two neighbouring cells with given cell identifiers can be efficiently determined as a function of their user identifiers for the given cell identifiers.

Moreover, by inverting the mapping process and combining it with interval matching algorithms, user identifiers that are characterized by non-colliding physical resources of the control messages for the given cells can conversely be determined. In other words, collisions of control messages can be prevented by adaptive assignment of user identifiers and their updating.

Accordingly, on a general level, embodiments avoid collisions of control messages by on-demand selective adaptation of user identifiers in interfering cells to

(i) aggregate available interference-free physical resources, used for control message transmissions by the victim and/or aggressor cell, and

(ii) allocate the aggregated resources to victim users affected by inter-cell interference.

These "interference-free" resources can be either simply currently idle resources, or resources that have been actively reserved for the purposed of collision avoidance, as well as resources that are to be released (e.g., after the completion of a user handover). Figure 3 illustrates utilisation of user equipment identifiers to control allocation of resources in the context of a handover of a user from a source cell (e.g., a macro cell) to a target cell (e.g., a small cell with expanded coverage), the basic idea of embodiments is to prevent the post-handover possibility of radio link failure (significantly growing with the magnitude of the small-cell cell-selection bias) by

(i) letting the target cell assign an identifier to the handed-over user such that

(ii) the target-cell control messages to the handed-over user reuse the same physical resources which the user has been originally occupying at the source cell (to be released at the end of the handover).

It will also be appreciated that such allocation or reallocation of user equipment identifiers can also occur, for example, periodically or when user equipment ceases to become idle.

It will be appreciated that this approach is fully compliant with the 3GPP Long Term Evolution (LTE) standards as the control of user identifiers is an integral part of the Radio Resource Control functionality.

Example Deployment

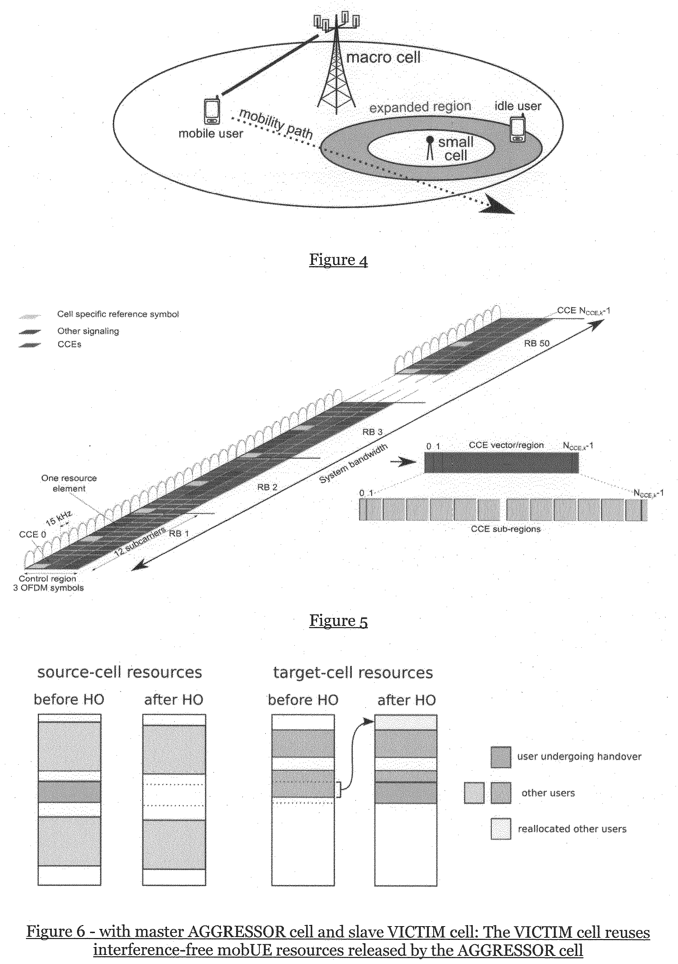

The following embodiments concern a scenario in which LTE-compliant co-channel small cells (SC) are deployed within the coverage range of an LTE-compliant macro cell (MC). Figure 4 illustrates an example deployment. Mobile user equipment (UE) crossing over or passing nearby a cell edge are likely to experience a strong co-channel interference that can cause PDCCH disruption, including handover failures, radio link failures, and corruption of payload data reception. The same observation holds also for users awaking from the idle mode at the cell edge, as well as for cell-edge users in the discontinuous reception mode. Practically, the expanded coverage region of a small cell, created by introducing a positive bias to the cell-selection mechanism, can be understood as the "cell edge" owing to the superior signal strength of the macro cell.

Radio Network Temporal Identifier

In the LTE standard, each UE is assigned a cell-specific radio network temporal identifier (RNTI) for identification and coding purposes. The RNTI is a number unique within one cell, ranging from 000A to FFF2.

Also, each downlink (DL) subframe is divided into control region and data region. A cell BS (eNodeB) indicates the locations of specific UE data in the shared data region by sending one dedicated Physical Downlink Control Channel (PDCCH) pointer message per (scheduled) UE bearer (i.e., data "flow") in the control region. In addition, the eNodeB encodes the cyclic redundancy check of the PDCCH of a given UE with the RNTI of that particular UE. On the receiver side, UE performs a blind search to decode its designated PDCCH by using the knowledge of its RNTI for cyclic redundancy checks.

Relationship Between Radio Network Temporal Identifier and Control Resources

Figure 5 illustrates the control region which consists of a set of contiguous Control Channel Elements (CCEs) that expand all across the system bandwidth and the first 3 OFDM symbols of each subframe. One CCE is comprised of 4 contiguous Resource Element Groups (REG), where each REG is comprised of 4 contiguous resource elements or Orthogonal frequency-division multiplexing (OFDM) subcarriers. Resource elements containing reference symbols or other signalling symbols are excluded from consideration. The CCEs are numbered from 0 to $N_{CCE,k-1}$, where **k** is the subframe index and $N_{CCE,k}$ is the total number of CCEs in the control region of subframe **k.**

In order to reduce the complexity of blind decoding, each UE monitors only a certain UE-specific search space (SS) in the control region that contains a limited number of possible PDCCH candidates. The UE attempts to blindly decode all the possible PDCCH candidates.

The total number of PDCCH candidates in a SS depends on the so-called aggregation level **L** equal to 1, 2, 4, or 8. A higher aggregation level **L** requires more CCEs resources as summarized in Table 1, but implies stronger coding and lower number of PDCCH candidates. The actual aggregation level may be selected based on channel quality indicators (CQI) reported by the UE.

Table 1 - Relationship between aggregation level, number of PDCCH candidates, and search space size [36.213]

| Type | Search space $S_k^{(L)}$ Aggregation level $L$ | Size [in CCEs] | Number of PDCCH candidates $M^{(L)}$ |
|---|---|---|---|
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

In particular, for a UE with a given RNTI, the CCEs corresponding to the PDCCH candidate **m** of search space $S_k^L$ are completely defined by the following formulation:

$$L \cdot \left[ (Y_k + m) \bmod \lfloor N_{CCE} / L \rfloor \right] + i \qquad \text{(Equation 1)}$$

where

- **m = 0**,..., $M^{(L)}$**-1** with $M^{(L)}$ being the number of PDCCH candidates to monitor per search space according to the aggregation level **L**;
- **i = o,..., L-1**; and
- **$Y_k$** is defined by

$$Y_k = A \cdot Y_{k-1} \bmod D \qquad \text{(Equation 2)}$$

where

- $Y_{-1}$ = **RNTI** $\neq$ **o**
- **A = 39827**;
- **D = 65537**; and
- **k** is the subframe number within a radio frame.

The number of PDCCH candidates $M^{(L)}$ and their sizes in terms of CCEs according to aggregation level **L** can be found in Equation 1.

It can be seen that the UE RNTI is the only variable in Equation 1, i.e. the RNTI uniquely determines the (logical) location of the UE SS. Practically, however, the logical CCEs of Equation 1 are permutated before their actual transmission onto physical OFDM subcarriers by using a standardized mapping algorithm that performs (i) deterministic block-level interleaving, and (ii) deterministic offsetting, defined based on the cell identify (C-ID), of the interleaver output (see 6.8.5 in 3GPP TS 36.211, "Physical Channels and Modulations," v. 10.6.0. for more details). Overall, the location of the PDCCHs physically transmitted by a cell depends primarily on the UE RNTIs and the C-ID.

In current cellular networks, the C-IDs are assigned in a static manner to ensure that no two interfering cells have the same C-ID, and use a different shift of common reference signals for the purpose of power boosting. However, UE RNTIs are currently assigned by serving BSs in a random manner, or without any specific preference. Hence, physical PDCCH transmissions of two neighbouring cells are likely to overlap (collide) which, given the pseudo-random spreading of the physical resources across the usable bandwidth, results in a uniform degradation of the PDCCH signal-to-noise-and-interference ratio (SINR). The SINR measure is the single-most relevant measure for a successful decoding of the control message. This problem is particularly serious at cell edges, especially in case of small-cell UEs located in the expanded coverage region of small cells having a positive bias to be applied during cell selection.

The following embodiments are described by using the notion of an aggressor cell (AGG) and a victim cell (VCT) - the aggressor cell causes interference to a (victim) user of the victim cell. For example,

(i) a mobile macro-cell user can experience downlink interference from a nearby small cell that can result into handover failure. In this case, the AGG is the small cell and the VCT is the macro cell,

(ii) after a mobile (originally macro-cell) user is handed over to a small cell with an expanded coverage region, the user can experience interference from the macro cell that can result into radio link failure. In this case, the AGG is the macro cell and the VCT is the small cell,

(iii) a case similar to (ii) consists of a user in idle mode (alternatively, in discontinuous reception mode) awaking in a victim cell in a location where it experiences interference from an aggressor cell.

Generally speaking, the embodiments avoid collisions of control messages between AGG and VCT by on-demand selective adaptation of RNTIs of the AGG and/or VCT to

(i) aggregate available interference-free physical resources, used for PDCCH transmissions by the AGG and/or VCT, and

(ii) allocate the aggregated resources to VCT users affected by interference from AGG.

The "interference-free" resources can be either simply currently idle resources, or resources that have been actively reserved for the purposed of collision avoidance, as well as resources that are to be released (e.g., after the completion of a user handover).

A collision of PDCCH transmissions by two neighbouring cells can be detected by (i) computing the overlap of the physical message resources using the above-described procedures, and (ii) comparing the degree of the mutual message overlap with a predetermined threshold. Since the standardized mapping of logical PDCCH transmissions to physical resources is deterministic, the whole process can be inversed, and used in combination with efficient matching algorithms (e.g., the algorithms for scheduling split *k*-intervals to determine the UE RNTIs for which the PDCCH transmissions of the two cells do not collide. As there can be differences in the degree of the PDCCH overlap between individual subframes, it may be preferred to search for a solution performing the best on a frame level.

To illustrate embodiments, a handover of a mobile UE from an AGG to an SRC is assumed. In this context, the goal is to prevent radio link failure of the handed-over mobile UE (denoted as mobUE) at the VCT due to the AGG interference (typically occurring when handing over a macro-cell user to a small cell with expanded coverage region without additionally using Enhanced inter-cell interference coordination (eICIC) techniques).

More specifically, embodiments let the VCT assign an identifier to the handed-over UE such that the control messages of the UE reuse the same physical resources which the UE has been occupying at the AGG and which are released at the end of the handover. The motivation for such a reuse policy is the fact that an immediate new occupation of the released resources by the AGG (i.e., their jamming by undesired interference from the point of view of the VCT) is very unlikely for relatively long periods after the handover completion. A primary reason for this observation is that besides the essentially random nature of resource allocation on the control-plane level, the intervals between individual call arrivals and new handovers in cellular networks are significantly longer compared to the duration of outage-critical post-handover periods.

As apparent from the above text, the offered examples can be readily extended to a non-handover situation (e.g., awaking of an idle UE) in which solely non-used and/or reserved resources are aggregated - without taking into account any specific resources known to be released in a given time frame as in the handover case.

For notational completeness, the mobile user involved in the handover (HO) procedure from an AGG to a VCT is denoted as mobUE, while the other UEs of a cell that are not involved in the handover are denoted as othUE. In particular, the term AGG othUE denotes all the UEs that are served by the AGG after the HO completion. Similarly, the term VCT othUE refers to all the UEs that are served by the VCT before the HO of mobUE.

Arrangement 1 - Master AGG & slave VCT

Figure 6 illustrates the victim cell allocating one of more Radio Network Temporal Identifiers to reuse resources released by the aggressor cell. The VCT assigns an RNTI to the mobUE for which the physical VCT PDCCH transmission does not collide (or, collides only in the minimum necessary manner) after the HO with any physical PDCCH transmission of the AGG. If necessary, the slave VCT adapts the RNTIs of its othUEs to create such an "interference-free" RNTI. Given the master status of the AGG, the RNTIs of the AGG othUEs remain invariant. In other words, the VCT adapts to the AGG condition.

For example, the slave VCT rearranges (if necessary) the RNTIs of its othUEs such that it can assign to the handed-over mobUE such an RNTI whose the physical resources overlap the most (preferably totally) with the physical PDCCH resources, occupied by the mobUE at the AGG before the HO.

In general, the AGG can reserve any arbitrary RNTI from the pool of its available RNTIs (the RNTI pool itself can be partitioned among multiple cells for the purpose of further cell-interference mitigation), and let the VCT rearrange the RNTIs of its othUEs accordingly. Effectively, the master AGG can order the VCT what RNTIs to use and, hereby, enforce an orthogonal partitioning of the RNTI resources without communicating its partitioning decisions or their real-time updates.

Arrangement 2 - Slave AGG & master VCT

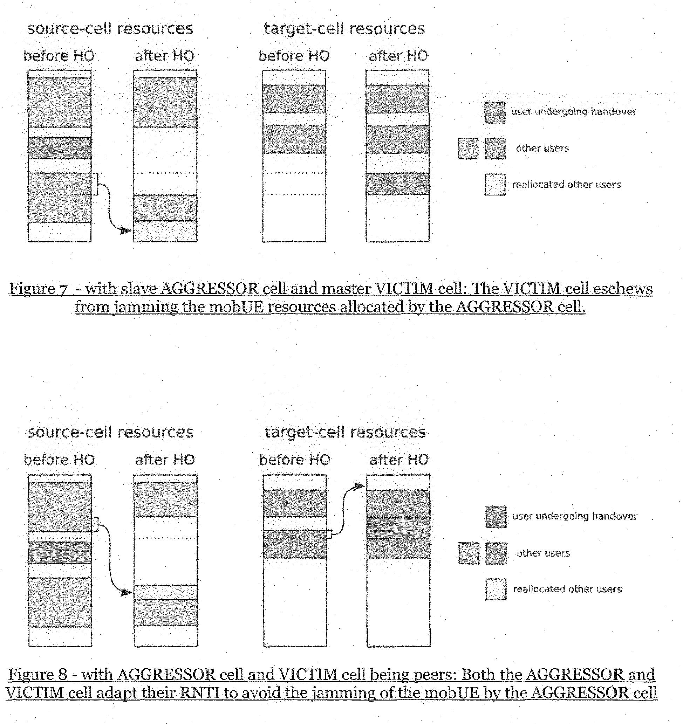

Figure 7 illustrates the aggressor cell allocating one of more Radio Network Temporal Identifiers to prevent use of resources utilised by the victim cell. This arrangement is identical to arrangement 1, except that the roles of the AGG and VCT are reversed. Herein, the AGG is the slave, and the VCT is the master. In other words, the AGG adapts to the condition/ decisions of the VCT (e.g., by re-arranging the RNTIs of its othUEs).

Arrangement 3 - Peer AGG & VCT (Fig. 8)

Figure 8 illustrates both the aggressor cell and the victim cell allocating one of more Radio Network Temporal Identifiers to prevent shared use of resources. Arrangements 1 and 2 mentioned above are characterized by unilateral AGG<>VCT dependency and can be generalized to a case in which, if necessary, both the AGG and the VCT adapt the RNTIs of their othUEs such that the VCT can assign an "interference-free" RNTI to the mobUE.

The mobUE RNTI selection of AGG/VCT can be done such that only the minimum necessary number of othUE RNTI changes is carried out.

A formal definition of the algorithm can be as follows:

- define the cardinality of a set X as |X|
- define subsets **S** and **S'** of AGG othUEs such that $|S| \leq |S'| \leq |AGG\ othUE|$
- define subsets **T** and **T'** of VCT othUEs such that $|T| \leq |T'| \leq |VCT\ othUE|$
- find all combinations of

    |**S**|**+1** AGG RNTIs, designated for |**S**| AGG othUEs in **S'** and 1 mobUE, and |**T**| VCT RNTIs, designated for |**T**| VCT othUEs in **T'**,

    such that the physical resources corresponding to AGG othUEs collide with $\leq$ **P** % of the physical resources of the mobUE at VCT **[criterion 1]**, and/or $\leq$ **Q** % of the physical resources of the mobUE and given VCT othUEs **[criterion 2]**

- select one combination of AGG/VCT RNTIs characterized by a minimum $|\mathbf{T}|+|\mathbf{S}|$. If multiple combinations are equivalent in terms of $|\mathbf{T}|+|\mathbf{S}|$, then select the one satisfying the best the criterion C1/C2 (break ties randomly).
- to implement the selected RNTI combination, apply the necessary RNTI changes of $|\mathbf{S}|$ AGG othUEs and $|\mathbf{T}|$ VCT othUEs, as well as assign the selected AGG RNTI to the mobUE
- within a given time interval, AGG assigns new RNTIs to new UEs such that the best possible satisfaction of the above criteria 1 and 2 is ensured, assuming invariant RNTIs of the original AGG othUEs

On a high level, this approach is fully compliant with the 3GPP LTE standard (RNTIs can be updated via Radio Resource Control messages) and requires no modification of the user handsets. Moreover, embodiments can be implemented in several instances solely at the small-cell side, implying the applicability also to multivendor networks comprising macro cells with incompatible small-cell products.

Embodiments can be combined with our other approaches which perform optimum partitioning of control/data-plane resources as well as antenna offset configurations. The property of boosting the PDCCH SINR has the potential of eliminating or at least reducing the need for eICIC techniques, particularly the one of subframe blanking. Nevertheless, embodiments are still compatible with the additional usage of standard eICIC techniques.

Embodiments can be applied recursively to hierarchical networks.

On its own, embodiments prevent control message collisions by cell-edge users, a critical issue particularly in the case of small cells with expanded coverage range. Further advantages consist of the simplicity and distributivity of the implementation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope, which is given by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications network node method, comprising:

    defining a set of neighbouring co-channel cells comprising a plurality of cells;
    determining that an event has occurred relating to user equipment being supported by at least two cells of said set, said event comprising initiation of handover of user equipment from a source cell to a target cell; and in response to determining that said event has occurred, allocating a user equipment identifier to said user equipment to which said event related to locate corresponding messages for said user equipment within a resource at locations which reduce interference between those messages within said resource, wherein said step of allocating comprises allocating said user equipment identifier to said user equipment to locate said messages within said resource of said target cell either:

to at least partially occupy a location occupied by said messages within said resource of said source cell; or to fully occupy a location occupied by said messages within said resource of said source cell.

2. The method of claim 1, wherein said step of allocating comprises allocating said user equipment identifier to user equipment to relocate said messages within said resource.

3. The method of any preceding claim, wherein said step of allocating comprises allocating said user equipment identifier to user equipment to relocate said messages within said resource to at least partially unoccupy locations utilised by messages for other user equipment.

4. The method of any preceding claim, wherein said step of allocating comprises allocating said user equipment identifier to user equipment to relocate said messages within said resource to fully unoccupy locations utilised by messages for other user equipment.

5. The method of any preceding claim, wherein said step of allocating comprises allocating said user equipment identifier to user equipment of said source cell and said target cell of said set to relocate said messages within said resource of at least said source cell to said target cell of said set.

6. The method of any preceding claim, wherein said step of allocating comprises allocating said user equipment identifier to user equipment supported by the target cell to relocate said messages within said resource of said target cell to at least partially unoccupy a location occupied by messages within said resource of said source cell used by user equipment of said source cell to be handed over to said target cell.

7. The method of any preceding claim, wherein said step of allocating comprises allocating said user equipment identifier to user equipment supported by the target cell to relocate said messages within said resource of said target cell to fully unoccupy a location occupied by messages within said resource of said source cell used by user equipment of said source cell to be handed over to said target cell.

8. The method of any preceding claim, wherein said step of allocating comprises allocating said user equipment identifier to user equipment supported by the source cell to relocate said messages within said resource of said source cell to at least partially occupy a location unoccupied by messages within said resource of said target cell used by said user equipment to be handed over to said target cell.

9. The method of any preceding claim, wherein said step of allocating comprises allocating said user equipment identifier to user equipment supported by the source cell to relocate said messages within said resource of said source cell to fully occupy a location unoccupied by messages within said resource of said target cell used by said user equipment to be handed over to said target cell.

10. The method of any preceding claim, wherein said messages comprise control messages.

11. A computer program product operable, when executed on a computer, to perform the method steps of any one of claims 1 to 10.

12. A wireless telecommunications network node, comprising:

logic operable to define a set of neighbouring co-channel cells comprising a plurality of cells; determining logic operable to determine that an event has occurred relating to user equipment being supported by at least two cells of said set, said event comprising initiation of handover of user equipment from a source cell to a target cell; and allocating logic operable in response to determining that said event has occurred to allocate a user equipment identifier to said user equipment to which said event related to locate corresponding messages for said user equipment within a resource at locations which reduce interference between messages within said resource, wherein said allocating logic is further operable to allocate said user equipment identifier to said user equipment to locate said messages within said resource of said target cell to either at least partially occupy or otherwise fully occupy a location occupied by said messages within said resource of said source cell.

**Patentansprüche**

1.  Verfahren für drahtlose Telekommunikationsnetzwerkknoten, das Folgendes umfasst:

    - Definieren eines Satzes von benachbarter Ko-Kanalzellen, der eine Vielzahl von Zellen umfassen;
    - Bestimmen, dass ein Ereignis in Bezug auf eine Benutzervorrichtung eingetreten ist, die von mindestens zwei Zellen des Satzes unterstützt wird, wobei das Ereignis das Einleiten der Übergabe der Benutzervorrichtung von einer Quellzelle zu einer Zielzelle umfasst; und
    - als Reaktion auf das Bestimmen, dass das Ereignis eingetreten ist, Zuweisen einer Benutzervorrichtungskennung zu der Benutzervorrichtung, auf die sich das Ereignis bezieht, um entsprechende Nachrichten für die Benutzervorrichtung innerhalb einer Ressource an Orten zu lokalisieren, die Interferenzen zwischen diesen Nachrichten innerhalb der Ressource reduzieren,

    wobei der Schritt des Zuweisens das Zuweisen der Benutzervorrichtungskennung zu der Benutzervorrichtung umfasst, um die Nachrichten innerhalb der Ressource der Zielzelle zu lokalisieren:

    - um entweder zumindest teilweise einen Ort zu belegen, der durch die Nachrichten innerhalb der Ressource der Quellzelle belegt ist, oder
    - um einen Ort, der durch die Nachrichten innerhalb der Ressource der Quellzelle belegt ist, vollständig zu belegen.

2.  Verfahren nach Anspruch 1,
    wobei der Schritt des Zuweisens das Zuweisen der Benutzervorrichtungskennung zu einer Benutzervorrichtung umfasst, um die Nachrichten innerhalb der Ressource zu verlagern.

3.  Verfahren nach einem der vorherigen Ansprüche,
    wobei der Schritt des Zuweisens das Zuweisen der Benutzervorrichtungskennung zu einer Benutzervorrichtung umfasst, um die Nachrichten innerhalb der Ressource an zumindest teilweise unbelegte Orten zu verlagern, die von Nachrichten für andere Benutzervorrichtungen verwendet werden.

4.  Verfahren nach einem der vorherigen Ansprüche,
    wobei der Schritt des Zuweisens das Zuweisen der Benutzervorrichtungskennung zu einer Benutzervorrichtung umfasst, um die Nachrichten innerhalb der Ressource an vollständig unbelegte Orte zu verlagern, die von Nachrichten für andere Benutzervorrichtungen verwendet werden.

5.  Verfahren nach einem der vorherigen Ansprüche,
    wobei der Schritt des Zuweisens das Zuweisen der Benutzervorrichtungskennung zu einer Benutzervorrichtung der Quellzelle und der Zielzelle des Satzes umfasst, um die Nachrichten innerhalb der Ressource mindestens der Quellzelle zu der Zielzelle des Satzes zu verlagern.

6.  Verfahren nach einem der vorherigen Ansprüche,
    wobei der Schritt des Zuweisens das Zuweisen der Benutzervorrichtungskennung zu einer von der Zielzelle unterstützten Benutzervorrichtung umfasst, um die Nachrichten innerhalb der Ressource der Zielzelle zu verlagern, um zumindest teilweise einen Ort freizugeben, der von Nachrichten innerhalb der Ressource der Quellzelle belegt wird, die von der Benutzervorrichtung der Quellzelle verwendet werden, um an die Zielzelle übergeben zu werden.

7.  Verfahren nach einem der vorherigen Ansprüche,
    wobei der Schritt des Zuweisens das Zuweisen der Benutzervorrichtungskennung zu einer von der Zielzelle unterstützten Benutzervorrichtung umfasst, um die Nachrichten innerhalb der Ressource der Zielzelle zu verlagern, um einen Ort, der von Nachrichten innerhalb der Ressource der Quellzelle belegt wird, die von der Benutzervorrichtung der Quellzelle verwendet wird, vollständig freizugeben, um an die Zielzelle übergeben zu werden.

8. Verfahren nach einem der vorherigen Ansprüche,
wobei der Schritt des Zuweisens das Zuweisen der Benutzervorrichtungskennung zu einer von der Quellzelle unterstützten Benutzervorrichtung umfasst, um die Nachrichten innerhalb der Ressource der Quellzelle zu verlagern, um zumindest teilweise einen Ort zu belegen, der nicht von Nachrichten innerhalb der Ressource der Zielzelle belegt ist, die von der Benutzervorrichtung verwendet werden, um an die Zielzelle übergeben zu werden.

9. Verfahren nach einem der vorherigen Ansprüche,
wobei der Schritt des Zuweisens das Zuweisen der Benutzervorrichtungskennung zu einer von der Quellzelle unterstützten Benutzervorrichtung umfasst, um die Nachrichten innerhalb der Ressource der Quellzelle zu verlagern, um einen Ort vollständig zu belegen, der nicht von Nachrichten innerhalb der Ressource der Zielzelle belegt ist, die von der Benutzervorrichtung verwendet werden, um an die Zielzelle übergeben zu werden.

10. Verfahren nach einem der vorherigen Ansprüche,
wobei die Nachrichten Control Messages umfassen.

11. Computerprogrammprodukt, das bei seiner Ausführung auf einem Computer in der Lage ist, die Verfahrensschritte gemäß einem der Ansprüche 1 bis 10 durchzuführen.

12. Drahtloser Telekommunikationsnetzwerkknoten, der Folgendes aufweist:

- eine Logik, die betreibbar ist, um einen Satz benachbarter Ko-Kanalzellen zu definieren, die eine Vielzahl von Zellen umfassen;
- eine Bestimmungslogik, die betreibbar ist, um zu bestimmen, dass ein Ereignis in Bezug auf eine Benutzervorrichtung eingetreten ist, die von mindestens zwei Zellen des Satzes unterstützt wird, wobei das Ereignis das Einleiten der Übergabe der Benutzerausrüstung von einer Quellzelle zu einer Zielzelle umfasst; und
- eine Zuweisungslogik, die als Reaktion auf das Bestimmen, dass das Ereignis eingetreten ist, um der Benutzervorrichtung eine Benutzervorrichtungskennung zuzuweisen, auf die sich das Ereignis bezieht, um entsprechende Nachrichten für die Benutzervorrichtung innerhalb einer Ressource an Stellen zu lokalisieren, die Interferenzen zwischen Nachrichten innerhalb der Ressource reduzieren,

wobei die Zuweisungslogik ferner betreibbar ist, um die Benutzervorrichtungskennung der Benutzervorrichtung zuzuweisen, um die Nachrichten innerhalb der Ressource der Zielzelle zu lokalisieren, um entweder zumindest teilweise oder sonst vollständig einen von den Nachrichten innerhalb der Ressource der Quellzelle belegten Ort zu belegen.

**Revendications**

1. Procédé de noeud de réseau de télécommunication sans fil, comprenant :

la définition d'un ensemble de cellules voisines partageant le même canal comprenant une pluralité de cellules ;
la détermination qu'un événement s'est produit relatif au support d'équipement utilisateur par au moins deux cellules dudit ensemble, ledit événement comprenant l'initialisation d'un transfert d'équipement utilisateur depuis une cellule source vers une cellule cible ; et
en réponse à la détermination que ledit événement s'est produit, l'allocation d'un identifiant d'équipement utilisateur audit équipement utilisateur en lien avec ledit événement afin de positionner des messages correspondants destinés audit équipement utilisateur au sein d'une ressource à des endroits qui réduisent l'interférence entre lesdits messages au sein de la ressource, selon lequel :
ladite étape d'allocation comprend l'allocation dudit identifiant d'équipement utilisateur audit équipement utilisateur afin de positionner lesdits messages au sein de ladite ressource de ladite cellule cible, soit :

afin d'occuper au moins partiellement une position occupée par lesdits messages au sein de ladite ressource de ladite cellule source ; soit
afin d'occuper complètement une position occupée par lesdits messages au sein de ladite ressource de ladite cellule source.

2. Procédé selon la revendication 1, selon lequel ladite étape d'allocation comprend l'allocation dudit identifiant d'équipement utilisateur audit équipement utilisateur afin de repositionner lesdits messages au sein de ladite ressource.

3. Procédé selon l'une quelconque des revendications précédentes, selon lequel ladite étape d'allocation comprend l'allocation dudit identifiant d'équipement utilisateur audit équipement utilisateur afin de repositionner lesdits messages au sein de ladite ressource pour libérer au moins partiellement des positions utilisées par des messages pour d'autres équipements utilisateurs.

4. Procédé selon l'une quelconque des revendications précédentes, selon lequel ladite étape d'allocation comprend l'allocation dudit identifiant d'équipement utilisateur audit équipement utilisateur afin de repositionner lesdits messages au sein de ladite ressource pour libérer complètement des positions utilisées par des messages pour d'autres équipements utilisateurs.

5. Procédé selon l'une quelconque des revendications précédentes, selon lequel ladite étape d'allocation comprend l'allocation dudit identifiant d'équipement utilisateur audit équipement utilisateur de ladite cellule source et de ladite cellule cible dudit ensemble afin de repositionner lesdits messages au sein de ladite ressource d'au moins ladite cellule source vers ladite cellule cible dudit ensemble.

6. Procédé selon l'une quelconque des revendications précédentes, selon lequel ladite étape d'allocation comprend l'allocation dudit identifiant d'équipement utilisateur audit équipement utilisateur supporté par la cellule cible afin de repositionner lesdits messages au sein de ladite ressource de ladite cellule cible pour libérer au moins partiellement une position occupée par des messages au sein de ladite ressource de ladite cellule source utilisée par l'équipement utilisateur de ladite cellule source pour être transférée à ladite cellule cible.

7. Procédé selon l'une quelconque des revendications précédentes, selon lequel ladite étape d'allocation comprend l'allocation dudit identifiant d'équipement utilisateur audit équipement utilisateur supporté par la cellule cible afin de repositionner lesdits messages au sein de ladite ressource de ladite cellule cible pour libérer complètement une position occupée par des messages au sein de ladite ressource de ladite cellule source utilisée par l'équipement utilisateur de ladite cellule source pour être transférée à ladite cellule cible.

8. Procédé selon l'une quelconque des revendications précédentes, selon lequel ladite étape d'allocation comprend l'allocation dudit identifiant d'équipement utilisateur audit équipement utilisateur supporté par la cellule source afin de repositionner lesdits messages au sein de ladite ressource de ladite cellule source pour occuper au moins partiellement une position inoccupée par des messages au sein de ladite ressource de ladite cellule cible utilisée par ledit équipement utilisateur pour être transférée à ladite cellule cible.

9. Procédé selon l'une quelconque des revendications précédentes, selon lequel ladite étape d'allocation comprend l'allocation dudit identifiant d'équipement utilisateur audit équipement utilisateur supporté par la cellule source afin de repositionner lesdits messages au sein de ladite ressource de ladite cellule source pour occuper complètement une position inoccupée par des messages au sein de ladite ressource de ladite cellule cible utilisée par ledit équipement utilisateur pour être transférée à ladite cellule cible.

10. Procédé selon l'une quelconque des revendications précédentes, selon lequel lesdits messages comprennent des messages de contrôle.

11. Produit de programme d'ordinateur opérable, lorsqu'il est exécuté par un ordinateur, pour effectuer les étapes de procédé selon l'une quelconque des revendications 1 à 10.

12. Noeud de réseau de télécommunications sans fil, comprenant :

de la logique opérable pour définir un ensemble de cellules voisines partageant le même canal comprenant une pluralité de cellules ;
de la logique déterminante opérable pour déterminer qu'un événement s'est produit relatif au support d'équipement utilisateur par au moins deux cellules dudit ensemble, ledit événement comprenant l'initialisation d'un transfert d'équipement utilisateur depuis une cellule source vers une cellule cible ; et
de la logique d'allocation opérable pour, en réponse à la détermination que ledit événement s'est produit, allouer un identifiant d'équipement utilisateur audit équipement utilisateur en lien avec ledit événement afin de positionner des messages correspondants destinés audit équipement utilisateur au sein d'une ressource à des endroits qui réduisent l'interférence entre lesdits messages au sein de ladite ressource, selon lequel ladite logique d'allocation est en outre opérable pour allouer ledit identifiant d'équipement utilisateur audit équipement utilisateur afin de positionner lesdits messages au sein de ladite ressource de ladite cellule cible afin d'occuper au moins partiellement, ou sinon complètement, une position occupée par lesdits messages au sein de ladite ressource de ladite cellule source.

Figure 1

Figure 2

Figure 3 - the target cell assigns an identifier to a user in handover such that the user can reuse the resources originally occupied at the source cell before the handover

Figure 4

Figure 5

Figure 6 - with master AGGRESSOR cell and slave VICTIM cell: The VICTIM cell reuses interference-free mobUE resources released by the AGGRESSOR cell

Figure 7 - with slave AGGRESSOR cell and master VICTIM cell: The VICTIM cell eschews from jamming the mobUE resources allocated by the AGGRESSOR cell.

Figure 8 - with AGGRESSOR cell and VICTIM cell being peers: Both the AGGRESSOR and VICTIM cell adapt their RNTI to avoid the jamming of the mobUE by the AGGRESSOR cell

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010108136 A
- WO 2010141913 A